# EUROPEAN PATENT APPLICATION

(11) **EP 0 834 851 A2**
(43) Date of publication of application: **08.04.1998**
(21) Application number: 97306106.2
(22) Date of filing: 11.08.1997
(51) Int. Cl.: G09B 9/16

(54) **An apparatus for adapting a motor vehicle to produce a skid training vehicle**

(30) Priority: 09.08.1996 GB 9616766
(71) Applicant: Rimmer, Thomas Edward, Lancashire, L39 3LJ (GB)
(72) Inventor: Rimmer, Thomas Edward, Lancashire, L39 3LJ (GB)
(74) Representative: Lyons, Andrew John

(57) **Abstract**

An apparatus (A) for attaching to a motor vehicle to produce a skid training vehicle comprising at least one traction reducing element (12) such as a wheel, means for attaching the apparatus to the vehicle intermediate the width thereof, for example a bar (2) and means for lowering and raising the traction reducing element to and above ground level. Movement of the traction reducing element (12) may be achieved by means of a hydraulic pump (1) which causes movement of a double-ended ram (6) attached to one end of which is the traction reducing element. The apparatus is fitted between respective rear and/or front wheels of the vehicle whereby lowering of the traction reducing element to ground level reduces the traction on the rear or front wheels of the vehicle thereby resulting in the vehicle being more prone to skid.

## Description

The present invention relates to an apparatus for adapting a motor vehicle to produce a skid training vehicle.

Motor vehicles are designed such that, under normal road and weather conditions, skidding of the vehicle can be generally avoided, thus making the vehicle safe to drive. However, in poor weather conditions and/or when driving a vehicle at high speeds, skidding may occur. It is therefore advantageous to provide training, particularly for the emergency services who are frequently required to drive a vehicle at high speeds, to teach such persons how to control a vehicle under skiddy conditions. Such conditions have been mimicked by providing an artificially prepared surface, or skid-pan, which helps induce skidding of the vehicle and hence, can be used for practise in maintaining control of the vehicle.

Additionally, motor vehicles have been produced in a manner which makes the vehicle more prone to skid. Prior hereto, this has been achieved by securing a frame to the underside of a vehicle. The frame has four arms extending horizontally from underneath the vehicle adjacent each corner thereof, attached to which are four hydraulic rams. Each ram has a wheel fitted to the end, and the wheel can be raised and lowered by controlling the supply of hydraulic fluid to the respective ram from an electrically powered hydraulic pump contained in the boot of the vehicle. Engagement of the ram wheels with the ground serves to reduce the traction of the standard wheels of the vehicle and results in the vehicle being adapted to skid. The teaching of the prior art "skid frame" is to provide four wheels (usually adjacent the corners of the vehicle) and positioned beyond the periphery of the vehicle.

This type of skid training vehicle does have a number of drawbacks. The framework is a permanent fixture to the vehicle and hence, the skid training vehicle can only be used as such and cannot be driven on normal roads. This means that transportation of a vehicle which has been adapted as a skid vehicle requires the use of a trailer or towing device. Furthermore, the positioning of the rams beyond the wheels of the motor vehicle results in the vehicle being approximately a metre wider than a standard vehicle. This naturally results in some drivers, who are not used to the increased width of the vehicle, bumping objects in the initial period of training. Additionally, the cost of the frame is very expensive.

It is an aim of the present invention to provide an apparatus for adapting a motor vehicle to produce a skid training vehicle which overcomes the above-mentioned drawbacks.

Accordingly, a first aspect of the invention provides a motor vehicle fitted with an apparatus for skid training wherein the apparatus comprises at least one traction reducing element adapted to be moved into and away from an operative position and wherein said at least one traction reducing element is positioned between lateral extremities of the motor vehicle.

For convenience, the traction reducing element or elements are preferably positioned between the longitudinal extremities of the vehicle.

Contrary to the previous teaching, it has been found that it is not essential to provide four traction reducing elements to produce a satisfactory skid training vehicle. Where only front or only rear wheel skids are to be simulated, only one traction reducing element need be provided, positioned to act substantially along the longitudinal central line of the vehicle and adjacent the front or rear wheels respectively.

However, it is preferred to provide the vehicle with two traction reducing elements such that front, rear or all wheel skids may be simulated and in such a case it is preferred to position one traction reducing element adjacent the front wheels and another adjacent the rear wheels. Both will preferably be positioned on the longitudinal axis of the vehicle. Alternatively, space may permit fitting of two traction reducing elements adjacent the front and/or rear wheels of the vehicle, in which case the two wheels are preferably symmetrically positioned laterally of the longitudinal axis of the vehicle.

Another aspect of the present invention provides an apparatus for adapting a motor vehicle for skid training, the apparatus comprising a traction reducing element, means for attachment to the vehicle intermediate the width thereof and means for lowering and raising the traction reducing element.

The means for raising and lowering the traction reducing element may comprise any convenient mechanism, be it mechanical, electro-mechanical, hydraulic, electro-hydraulic or a combination thereof.

In a preferred construction of the apparatus of the present invention, movement of the traction reducing element is controlled by an hydraulic ram. Conveniently, the traction reducing element is mounted directly to a moveable element of the ram. Alternatively, the traction reducing element may be attached to an intermediate member which is secured to the movable element of the ram. Preferably, the ram is orientated in a direction perpendicular to the ground surface. However, the ram may be orientated in a direction parallel to the ground surface, the traction reducing element being mounted to swivel to enable contact of the same with the ground surface.

Preferably, the ram is raised and/or lowered under the control of, for example, a hydraulic pump driven by an electric motor powered by a battery. In particular, a double-ended ram may be employed to enable the ram to be both lowered and raised by hydraulic pressure generated by the hydraulic pump using a suitable control valve. Alternatively, the traction reducing element may be moved mechanically, for example using a screw mechanism.

Preferably, the electrically driven hydraulic pump is activated/deactivated by a switch or joystick and is provided with a flow controller, for example by means of an adjustable flow restrictor to enable the ram to be raised and lowered at various speeds. Conveniently the pump is provided with a biflow valve to enable the ram to be moved in more than one direction, being actuated by a pair of solenoids.

Preferably, the means for attachment of the ram to the vehicle is a bar which may be secured to the vehicle by retaining means, such as nuts and bolts. It is preferable that the bar is straight and is attached substantially horizontally to the underside of the vehicle with the ram extending perpendicularly, preferably upwardly, from the bar. In particular, a part of the ram, preferably being the part comprising the movable element thereof, may pass through a bore provided in the bar, and may be secured to the bar by suitable retaining means. Preferably, the bore is provided in the centre of the bar.

Alternatively, the ram may be secured to the bar which is situated inside the vehicle for example in the boot of the vehicle, with the movable element of the ram passing through a bore provided in the floor of the vehicle to allow the element to move up and down therethrough. Preferably, a retaining element may surround the top of the movable element and be attached to the underside of the vehicle by means of, for example, nuts and bolts.

Additionally, the bar may have an inverted V-shaped element attached thereto to produce an A-frame, the ram being attached to the frame at the apex of the inverted V-shaped element and at the centre of the bar. It is to be appreciated that the A-frame may also be produced as a single unit.

The bar to which the ram is attached for securement to the vehicle may have a section which is U-shaped in cross section, preferably having flanges at either end thereof. This allows a large portion of the apparatus to fit in a spare wheel well of a motor vehicle, thereby occupying less space in the vehicle. The inverted V-shaped element may be attached to the bar at the flanges provided at either end thereof.

It is to be appreciated that the bar for attachment of the ram to the vehicle may be made of any sufficiently strong material to withstand the weight that is exerted thereon.

The traction reducing element of the apparatus of the present invention preferably comprises a wheel for rotary engagement with the ground when lowered, or other low friction ground engaging means. Alternatively, the traction reducing element may be provided by an air cushion to reduce the traction on the wheels of the vehicle. In such an embodiment air is forced into an upturned tray, for example, by means of an electrically driven impeller. Alternatively, hydraulic means or a separate internal combustion engine may be used.

More preferably, the apparatus is provided with two wheels for reducing the traction on the wheels of the vehicle. Preferably, the wheels are attached to a cross-bar which is attached to the movable element of the ram. The movable element preferably extends substantially perpendicularly from the cross-bar. Preferably, the movable element is attached to the centre of the bar, having a wheel extending downwards from each end of the bar equidistant from the centre.

The cross-bar may also be provided with a stabilising member, for example in the form of a pole, which extend upwards from the bar in the same direction as the movable element of the ram. It is preferable that two members are provided, preferably being positioned either side of the movable element, between the element and the wheel. Preferably, the members pass through a bore provided in the bar to which the ram is attached such that the members can move up and down therethrough with the corresponding movement of the movable element of the ram. Similarly, it is to be appreciated that a bore must also be provided in the floor of the vehicle for passage of the stabilising member.

It is preferable that the wheel or wheels are mounted in a manner to allow swivelling thereof, i.e., in the form of a caster. Preferably, the wheels are detachable from the cross bar such that the bulk of the apparatus may remain fitted to the vehicle whilst the vehicle is used on normal road surfaces. For example, the wheels may be provided with an attachment for sliding over the ends of the cross bar which is then secured in place by means of suitable fastening means, such as a grub screw.

The apparatus of the present invention preferably includes suitable means for locking up the suspension of the vehicle. For example, a cylinder may be provided attached to the body of the vehicle having a piston attached to the axle of the vehicle, the piston being moveable between an operative position which locks up the suspension and an inoperative position which releases the suspension such that it functions normally. Preferably, the piston and the cylinder are provided with transverse slots therethrough which, when aligned, lock up the suspension. A pin may be used to manually lock up the suspension, the pin passing through the aligned slots of the cylinder and piston. Alternatively, other means may be used, such as a hydraulic ram to allow the suspension to be locked hydraulically or by means of an electric solenoid.

Alternatively, a hydraulic ram may be attached to the body of the vehicle, the ram having a moveable piston comprising a shaft having a knob at the free end thereof. Preferably, the shaft passes through a bore in a plate which is attached to the suspension of the vehicle but is prevented from becoming free of the plate by the provision of the knob. Movement of the pison upwards causes the knob to push on the plate thereby locking up the suspension.

As mentioned, the A-frame of the apparatus may be contained in the boot of the vehicle with the movable part of the ram extending through the floor thereof. Preferably, the electrically driven hydraulic pump and/or the battery are also contained within the boot of the vehicle. However, the aforementioned features may be situated at other convenient locations within the vehicle.

For a better understanding of the present invention and to show more clearly how it may be carried into effect, reference will now be made by way of example only, to the accompanying drawings in which:-
Figure 1 is a schematic diagram of one embodiment of an apparatus according to the present invention;
Figure 2 is a cross-sectional view of a motor vehicle fitted with an apparatus of the type shown in Figure 1;
Figure 3 is a cross-sectional view of a motor vehicle fitted with an alternative embodiment of an apparatus according to the present invention;
Figure 4 is a schematic diagram of another embodiment of the present invention;
Figure 5 is a schematic diagram of one of the traction reducing elements shown in Figure 4;
Figure 6a is a schematic diagram of means for locking up the suspension of a vehicle fitted with an apparatus of the present invention, shown in the unlocked position;
Figure 6b is a schematic diagram of the means for locking up the suspension shown in Figure 6a, in the locked position;
Figure 7a is a schematic diagram of alternative means for locking up the suspension of a vehicle fitted with an apparatus of the present invention; shown in the unlocked position;
Figure 7b is a schematic diagram of the means for locking up the suspension shown in Figure 7a, in the locked position; and
Figure 8 is a perspective diagram of a vehicle fitted with means for locking up the suspension.

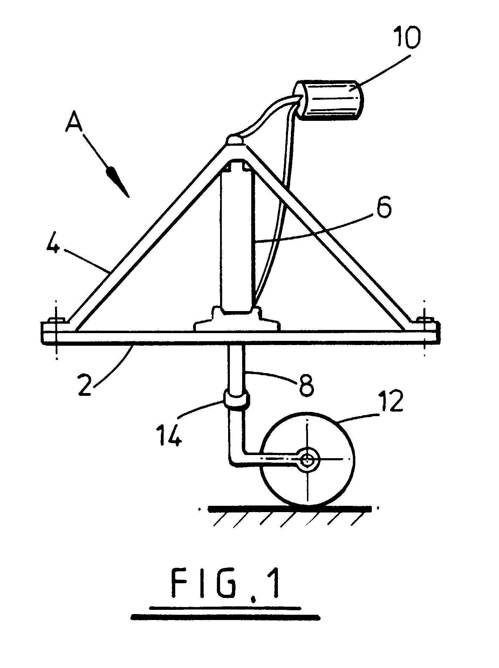

Referring to Figure 1 of the accompanying drawings, a preferred embodiment of an apparatus of the present invention is illustrated. The apparatus A for attaching to a motor vehicle to produce a skid training vehicle comprises a hydraulic ram 6 attached to an A-frame consisting of a substantially horizontal bar 2 and an inverted V-shaped element 4. The ram 6 is attached at the centre of the bar 2 and at the apex of the V-shaped element 4 with the piston 8 of the ram passing through a bore in the centre of the bar such that it extends below the bar. An A-frame is used in preference to a single bar to provide a more stable apparatus and to prevent the bar flexing under the weight of the vehicle. However, it is to be appreciated that a single bar may equally be employed in the apparatus of the present invention. The piston has a wheel 12 attached to its free end by means of a bearing 14 and the ram is operated by means of a standard hydraulic pump 10 driven by a motor.

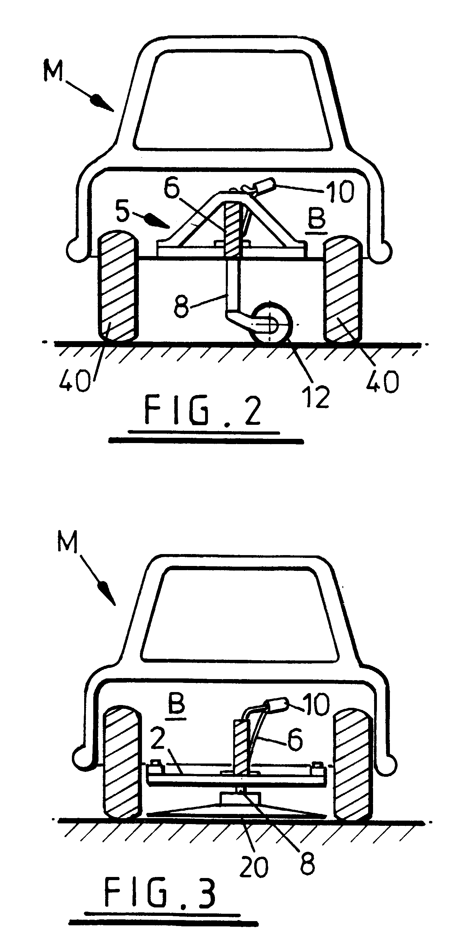

The aforementioned embodiment is particularly suitable for positioning between the rear wheels 40 of a motor vehicle M, as illustrated in Figure 2, but is not limited to such a position. The A-frame 5 is preferably placed in the boot B of the vehicle and secured to the floor, with the piston 8 passing through a hole in the floor such that, in the operative position, the wheel 12 may contact the ground surface. The electrically driven hydraulic pump 10 and control unit connected to the hydraulic ram 6 may also be contained within the boot of the vehicle or may be conveniently situated elsewhere in the vehicle.

In operation, the electrically driven hydraulic pump 10 is activated, for example by means of a joystick which is preferably positioned on the dashboard in the front of the vehicle, causing the piston of the ram to be lowered or raised, hence resulting in a corresponding movement of the wheel attached thereto. The lowering of the wheel to the road, or other surface, reduces the traction on the rear wheels of the vehicle and hence, results in easier skidding of the motor vehicle.

Preferably, a similar apparatus, with or without inverted V-shaped element of the A-frame is also fitted between the front wheels of the vehicle (not shown).

The hydraulic ram employed in the apparatus of the invention is preferably a double ended hydraulic ram ie. a ram that may be raised and lowered by means of the hydraulic pump. The pump is a conventional motor driven hydraulic pump powered by a battery. Preferably, the hydraulic pump is provided with a flow controller, for example consisting of an adjustable flow restrictor which enables the piston of the ram to be raised and lowered at different speeds due to the different rate of flow of hydraulic fluid. The hydraulic pump is also provided with means, such as a biflow valve, operated by a pair of solenoids to enable the piston to be moved in different directions.

In another preferred embodiment of the present invention, the piston 8 of the hydraulic ram is provided with a hover motor 20 for reducing the traction on the wheels of the vehicle, as illustrated in Figure 3 of the accompanying drawings (shown in raised position). In this embodiment the hydraulic ram 6 is shown attached to the underside of the vehicle by means of a single, horizontal bar 2, but an A-frame may be utilised if desired. In operation, the hover motor, for example consisting of an upturned tray and electrically driven air impeller, provides a cushion of air thereby reducing the traction on the wheels of the vehicle and enabling the vehicle to skid more easily. Alternatively, hydraulic means or a separate internal combustion engine may be used. The motor may be powered by the same battery that powers the hydraulic pump or an alternative power supply may be provided. This particular embodiment has the additional advantage of reducing the stress placed on the apparatus of the invention when driving over rough surfaces, eg. pot holes.

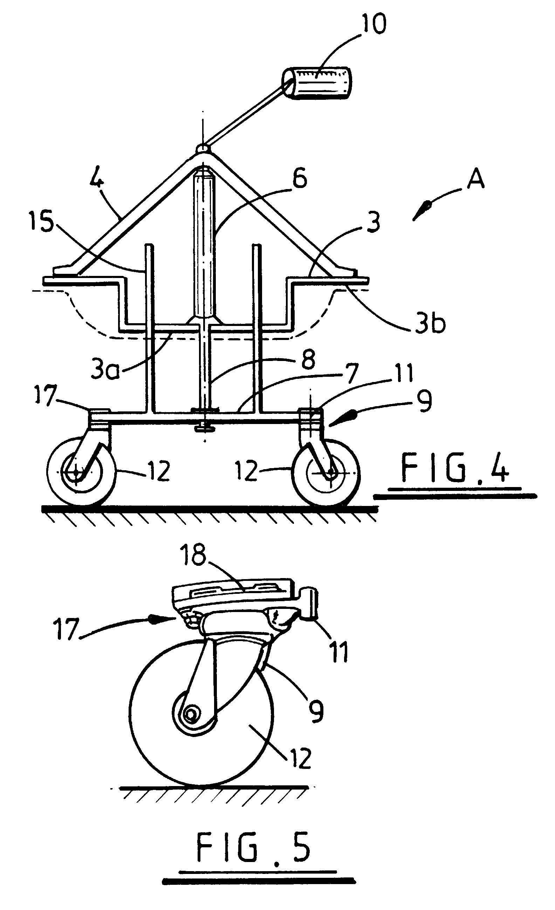

Figures 4 and 5 of the accompanying drawings illustrate another embodiment of the present invention. Identical features already referred to in relation to Figure 1 are given the same reference numerals and only the differences will be discussed in detail. The apparatus A is again provided with a hydraulic ram 6 attached to an A-frame consisting of a bar 3 and inverted V-shaped element 4, with the piston 8 of the ram passing through a bore in the centre of the bar. The bar 3 has a U-shaped section 3a provided at either end with flanges 3b to which the ends of the V-shaped elements 4 are attached. The U-shaped section of the bar allows a portion of the A-frame to be placed in the spare wheel well (indicated by broken lines in Figure 4) of the vehicle thereby occupying less space in the vehicle boot.

The end of the piston 8 furthest from the hydraulic ram 6 is provided with a cross-bar 7 substantially perpendicular thereto which is provided with a traction reducing element 12, in the form of a wheel, at either end thereof extending downwards therefrom. The piston 8 is attached to the centre of the cross-bar with the wheels being positioned equidistant from the piston and provided on casters 9 to allow them to rotate and swivel. The wheels 12 are detachable from the cross-bar 7 by means of an attachment 17 having a slot 18 through which the ends of the cross-bar may be placed, the attachment being tightened around the cross-bar by means of, for example a grub screw 11 (see Figure 5). This allows the wheels to be removed from beneath the vehicle such that the vehicle may be driven on normal roads without having to remove the entire apparatus from the vehicle after each practise session.

A solid metal stabilising rod 15 is attached to the cross-bar on either side of the ram, passing through respective passages provided in the bar 3 of the A-frame and the vehicle floor to assist in preventing rotation of the cross-bar when in use. The stabilising rods are able to move up and down with the corresponding movement of the piston of the hydraulic ram. The hydraulic ram is connected to a pump 10 as previously described in relation to Figure 1 which may also be located in the spare wheel well of the vehicle. Hence, the lowering of the piston 8 of the ram by means of the hydraulic pump 10 lowers the cross-bar and brings the wheels 12 into contact with the surface of the ground, thereby reducing the friction on the conventional wheels of the vehicle to create a vehicle which is adapted to skid.

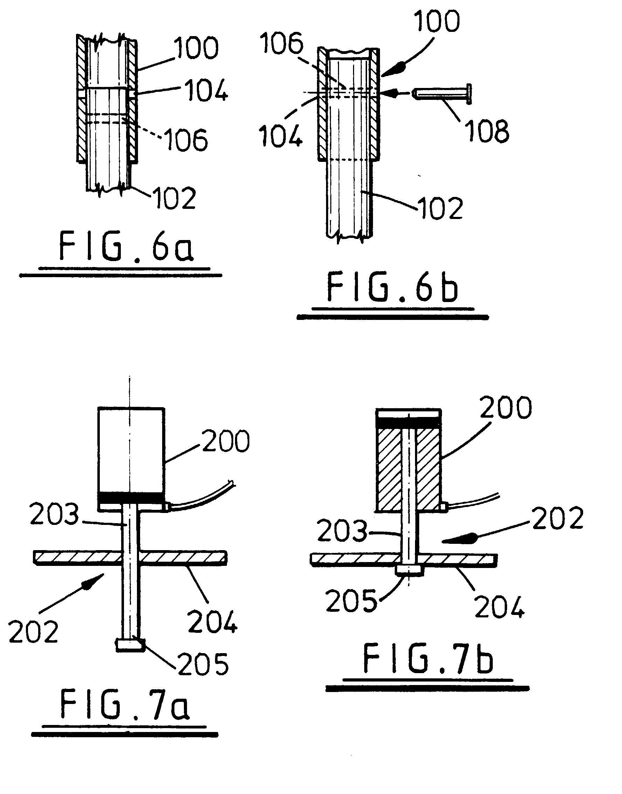

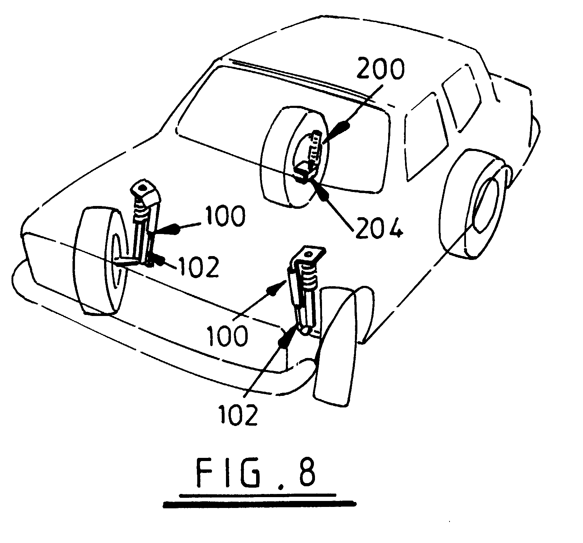

With the apparatus of the present invention it is also preferable to include further means to lock up the conventional suspension of the motor vehicle to provide a lower centre of gravity and prevent damage occurring to the vehicle suspension whilst it is being used as a skid vehicle, as illustrated in Figures 6 to 8 of the accompanying drawings. This may be achieved in a number of ways. For example, a cylinder 100 may be attached to the body of the vehicle, having a movable piston 102 extending from one end thereof. The cylinder and piston are both provided with transverse slots 104, 106 respectively which when spaced apart release the lock (see Figure 6a). Aligning the slots and holding them in place, for example by means of a pin 108, locks up the suspension (see Figure 6b). The cylinder and piston may be locked manually, hydraulically or by means of an electric solenoid.

Other means may be used to lock up the suspension such as an hydraulic ram 200 which is attached to the body of the vehicle, (refer to Figure 7), having a piston 202. A plate 204 is bolted to the suspension through which the shaft 203 of the piston is able to pass but, due to the provision of a knob 205, the piston is prevented from passing all the way through the plate 204. When the piston is pushed up the cylinder the end of the knob of the piston is pushed against the plate thereby locking up the suspension (see Figure 7b).

The apparatus according to the present invention provides a number of advantages. Firstly, the apparatus is not a permanent feature of the motor vehicle and hence, conventional vehicles can be temporarily adapted to be skid training vehicles after which the apparatus may be removed or disengaged to allow the vehicle to be driven on normal, public roads. The apparatus is therefore a cheaper means of providing a skid training vehicle since a vehicle does not have to be purchased for the sole purpose of being used for skid training. Furthermore, the apparatus itself is a great deal cheaper than the prior art framework used to produce a skid training vehicle.

Additionally, the positioning of the apparatus between the wheels of the vehicle means that the width of the vehicle is not altered. This should reduce the number of accidents that previously occurred during a driver's initial period of training before the driver had become accustomed to the increased width of the vehicle.

## Claims

1. An apparatus for adapting a motor vehicle for skid training, the apparatus comprising at least one traction reducing element, means for attachment to the vehicle intermediate the width thereof and means for lowering and raising the traction reducing element.

2. An apparatus as claimed in claim 1, wherein mechanical means are provided for raising and lowering the traction reducing element.

3. An apparatus as claimed in claim 2, wherein the traction reducing element is moved using a screw mechanism.

4. An apparatus as claimed in claim 1, wherein electro-mechanical means are provided for raising and lowering the traction reducing element.

5. An apparatus as claimed in claim 1, wherein electro-hydraulic means are provided for raising and lowering the traction reducing element.

6. An apparatus as claimed in claim 1, wherein hydraulic means are provided for raising and lowering the traction reducing element.

7. An apparatus as claimed in claim 6, wherein an hydraulic ram is provided for controlling the movement of the at least one traction reducing element.

8. An apparatus as claimed in claim 7, wherein the at least one traction reducing element is mounted directly to a movable element of the hydraulic ram.

9. An apparatus as claimed in claim 7, wherein the at least one traction reducing element is attached to an intermediate member which is joined to a movable element of the ram.

10. An apparatus as claimed in claim 7, 8 or 9, wherein the ram is orientated in a direction perpendicular to the ground surface.

11. An apparatus as claimed in claim 7, 8 or 9, wherein the ram is mounted in a direction substantially parallel to the ground surface.

12. An apparatus as claimed in claim 11, wherein the traxction reducing element is mounted to swivel, thereby enabling contact with the ground surface.

13. An apparatus as claimed in any one of claims 7 to 12, wherein the ram is raised and/or lowered by means of a hydraulic pump.

14. An apparatus as claimed in claim 13, wherein the pump is driven by an electric motor.

15. An apparatus as claimed in claim 13, wherein the electric motor is powered by a battery.

16. An apparatus as claimed in any one of claims 7 to 15, wherein a double-ended ram is provided to enable the ram to be lowered and raised by means of the hydraulic pump.

17. An apparatus as claimed in claim 16, wherein the lowering and raising of the ram is controlled by means of a suitable control valve.

18. An apparatus as claimed in any one of claims 13 to 17, wherein the pump is activated or deactivated by a switch or joystick.

19. An apparatus as claimed in any one of claims 13 to 18, wherein the pump is provided with a flow controller to enable the ram to be lowered and raised at various speeds.

20. An apparatus as claimed in claim 19, wherein the flow controller is an adjustable flow restrictor.

21. An apparatus as claimed in any one of claims 13 to 20, wherein the pump is provided with a biflow valve to enable the ram to be moved in more than one direction.

22. An apparatus as claimed in claim 21, wherein the biflow valve is controlled by a pair of solenoids.

23. An apparatus as claimed in any one of claims 7 to 22, wherein the means for attachment of the ram to the vehicle is a bar which may be secured to the vehicle by retaining means.

24. An apparatus as claimed in claim 23, wherein the retaining means are nuts and bolts.

25. An apparatus as claimed in claim 23 or 24, wherein a part of the ram passes through a bore provided in the bar.

26. An apparatus as claimed in claim 25, wherein the movable element of the ram passes through the bar.

27. An apparatus as claimed in claim 25 or 26, wherein the bore is in the centre of the bar.

28. An apparatus as claimed in any one of claims 23 to 27, wherein the ram extends substantially perpendicularly from the bar.

29. An apparatus as claimed in claim 28, wherein the ram extends upwardly from the bar.

30. An apparatus as claimed in any one of claims 23 to 29, wherein the bar is substantially straight.

31. An apparatus as claimed in claim 30, wherein the bar is arranged for attachment to the underside of the vehicle.

32. An apparatus as claimed in any one of claims 23 to 30, wherein the ram is secured to the bar for attachment inside the vehicle, having a part of the ram passing through a bore provided in the vehicle floor.

33. An apparatus as claimed in claim 32 wherein the movable element of the ram passes through the bore in the vehicle floor.

34. An apparatus as claimed in claim 33, wherein a retaining element is provided around the top of the movable element and is attached to the underside of the vehicle by suitable fastening means.

35. An apparatus as claimed in any one of claims 32 to 34, wherein the bar is provided with an inverted V-shaped element to produce an A-frame.

36. An apparatus as claimed in claim 35, wherein the A-frame is produced as a single unit.

37. An apparatus as claimed in claim 35 or 36, wherein the ram is attached to the A-frame at the apex of the inverted V-shaped element and at the centre of the bar.

38. An apparatus as claimed in claims 32 to 37, wherein the bar is U-shaped in cross section.

39. An apparatus as claimed in claim 38, wherein the bar is provided with flanges at either end of the U-shaped section.

40. An apparatus as claimed in claim 39, wherein the flanges of the bar provide means for attachment of the inverted V-shaped element to the bar.

41. An apparatus as claimed in any one of claims 1 to 40, wherein the traction reducing element is provided by means of an air cushion.

42. An apparatus as claimed in claim 41, wherein the air cushion is provided by means of an upturned tray having air forced therein.

43. An apparatus as claimed in claim 42, wherein an electrically driven air impeller forces air into the tray.

44. An apparatus as claimed in claim 42, wherein hydraulic means are provided to force air into the tray.

45. An apparatus as claimed in claim 42, wherein a separate internal combustion engine is provided to force air into the tray.

46. An apparatus as claimed in any one of claims 1 to 40, wherein the at least one traction reducing element is in the form of a wheel.

47. An apparatus as claimed in claim 46, wherein two wheels are provided.

48. An apparatus as claimed in claim 47, wherein the wheels are attached to a cross-bar.

49. An apparatus as claimed in claim 48, wherein the cross-bar is attached to the movable element of the ram.

50. An apparatus as claimed in claim 49, wherein the movable element extends substantially perpendicularly from the cross-bar.

51. An apparatus as claimed in claim 49 wherein the moveable element extends from the cross-bar at an angle less than 90°.

52. An apparatus as claimed in claim 52, wherein the moveable element is mounted to swivel.

53. An apparatus as claimed in any one of claims 49 or 52, wherein the movable element is attached to the centre of the cross-bar.

54. An apparatus as claimed in any one of claims 48 to 53, wherein a wheel extends downwards from each end of the cross-bar.

55. An apparatus as claimed in claim 54, wherein the wheels are positioned equidistant from the centre of the cross-bar.

56. An apparatus as claimed in any one of claims 48 to 55, wherein at least one stabilising member is provided on the cross bar.

57. An apparatus as claimed in claim 56, wherein two stabilising members are provided on the cross bar.

58. An apparatus as claimed in claim 57, wherein the stabilising members are symmetrically positioned either side of the centre of the cross-bar.

59. An apparatus as claimed in any one of claims 56 to 58, wherein the stabilising member extends upwards from the cross-bar.

60. An apparatus as claimed in claim 57, 58 or 59, wherein the stabilising members are positioned either side of the movable element of the ram.

61. An apparatus as claimed in any one of claims 56 to 60, wherein the stabilising members pass through a bore provided in the bar to which the ram is attached for attachment to the vehicle.

62. An apparatus as claimed in claim 61, wherein the at least one member passes through a bore provided in the floor of the vehicle.

63. An apparatus as claimed in any one of claims 56 to 62, wherein the stabilising member is in the form of a pole.

64. An apparatus as claimed in claim 63, wherein the pole is solid.

65. An apparatus as claimed in any one of claims 46 to 64, wherein the at least one wheel is mounted to allow swivelling thereof.

66. An apparatus as claimed in claim 65, wherein the wheel is in the form of a caster.

67. An apparatus as claimed in any one of claims 46 to 66, wherein the at least one wheel is detachable from the cross bar.

68. An apparatus as claimed in claim 67, wherein the wheels are provided with an attachment for sliding over the ends of the cross bar and secured in place using suitable fastening means.

69. An apparatus as claimed in claim 68, wherein the attachment is secured in place by means of a grub screw, clip or pin and hole.

70. An apparatus as claimed in any one of 1 to 69, further comprising means for locking up the suspension of the vehicle.

71. An apparatus as claimed in claim 70, wherein a cylinder is provided for attachment to the body of the vehicle having a piston for attachment to the axle of the vehicle, the piston being moveable between an operative position which locks up the suspension and an inoperative position which releases the suspension.

72. An apparatus as claimed in claim 71 wherein the piston and cylinder are provided with transverse slots therethrough which when aligned lock up the suspension.

73. An apparatus as claimed in claim 72, wherein a pin is provided to manually lock up the suspension by means of the cylinder and pin.

74. An apparatus as claimed in claim 70, wherein a hydraulic ram is provided to hydraulically lock up the suspension.

75. An apparatus as claimed in claim 74, wherein the hydraulic ram is for attachment to the body of the vehicle, the ram having a moveable piston in the form of a shaft with a knob at the free end thereof.

76. An apparatus as claimed in claim 75, wherein the shaft of the piston passes through a plate for attachment to the suspension of the vehicle but is prevented from becoming free of the plate due to the provision of the knob at the end of the shaft.

77. An apparatus as claimed in claim 72, wherein an electric solenoid is used to lock up the suspension.

78. A motor vehicle fitted with an apparatus for skid training according to any one of claims 1 to 77 wherein the apparatus has at least one traction reducing element adapted to be moved into and away from an operative position and wherein said at least one traction reducing element is positioned between lateral extremities of the vehicle.

79. A motor vehicle as claimed in claim 78, wherein the apparatus is positioned such that the at least one traction reducing element is positioned between longitudinal extremities of the vehicle.

80. A motor vehicle as claimed in claim 78 or 79, wherein the apparatus is positioned such that the traction reducing element is positioned to act substantially along the longitudinal, central line of the vehicle.

81. A motor vehicle as claimed in claim 78, 79 or 80 wherein the apparatus is positioned such that the at least one traction reducing element is positioned adjacent the front or rear wheels of the vehicle.

82. A motor vehicle as claimed in claim 81, wherein an apparatus is provided adjacent the rear and front wheels of the vehicle respectively.

83. A motor vehicle as claimed in any one of claims 78 to 82, wherein a pair of traction reducing elements are provided on the apparatus and are symmetrically positioned laterally of the longitudinal axis of the vehicle.

84. An apparatus for adapting a motor vehicle for skid training substantially as hereinbefore described and with reference to Figures 1 and 2, 3, 4 and 5, 6, 7 or 8 of the accompanying drawings.
